# EUROPEAN PATENT APPLICATION

(11) **EP 2 835 778 A1**
(43) Date of publication of application: **11.02.2015**
(21) Application number: 13875519.4
(22) Date of filing: 25.03.2013
(51) Int. Cl.: G06Q 30/00

(54) **MERCHANDISE ANTI-COUNTERFEITING IDENTIFICATION METHOD**

(30) Priority: 22.02.2013 CN 201310057128
(71) Applicant: Xiang Yang Hao Zheng Industrial Co., Ltd., Xiangyang, Hubei 420600 (CN)
(72) Inventor: GUO, Chengwu, Xiangyang Hubei 441052 (CN)
(74) Representative: Sun, Yiming
(86) International application number: PCT/CN2013/073119
(87) International publication number: WO 2014/127551

(57) **Abstract**

The present invention relates to anti-counterfeit identification, particularly a method of anti-counterfeit identification wherein a tracking platform is established to render and store enterprises' registration information (including registered names and telephone numbers) and security codes, a client is established connected to the tracking platform for inquiry, manufacturers print on their products corresponding anti-counterfeit phone numbers, corporate security codes and commodity security codes obtained from the anti-counterfeit tracking platform, and commodity security systems are established by the manufacturers for storage of commodity security codes and inquiry records. In each procedure of a commodity sales process, commodity security can be directly fed back to corresponding manufacturer; inquiry can be also made via telephone or mobile, having reduced complexity of anti-counterfeit inquiries; information inquired will be rendered based on corporate names registered on the anti-counterfeit tracking platform, which will radically eliminate the possibility of falsification by counterfeit and shoddy product manufacturers.

## Description

### Field of the Invention

The present invention relates to anti-counterfeit identification, particularly a method of anti-counterfeit identification.

### Background of the Invention

Counterfeit and shoddy commodities have been troubling manufacturers, merchants and consumers for a long time, and incurring tremendous economic loss to the society and the country. Both the country and enterprises invest great manpower and material resources in anti-counterfeiting activities. In market economy, identification and elimination of counterfeit and shoddy commodities are of great significance to protecting enterprises and consumers' benefits and to promoting healthy and sustainable social and economic development of the country. Meanwhile, the people have been also looking for a simple, feasible and reliable method of anti-counterfeit identification.

Currently, there are diversified anti-counterfeit identification methods, including several digital anti-counterfeiting techniques that apply anti-counterfeiting RFID labels. RFID labels are attached to commodity package and carry different random codes; the random codes are stored in merchants' computers in form of databases; the merchants' computers are connected to RFID card readers at shopping centers; the RFID card readers return random codes read from labels to the merchants' database through network, so that identification can be done in the merchants' computers and then identification results will be fed back to users. However, anti-counterfeit identification in this way has the following shortcomings: 1. The identification method is complicated. Actually, few consumers will use card readers to identify commodity authenticity; 2. Identifying devices can be counterfeited by using counterfeit displays to show true commodity sequences; 3. A fake inbound system can be easily forged at a low cost due to network faults to obtain fake information and nullify anti-counterfeit identification.

For anti-counterfeit identification in other ways such as inquiry via short messages by using a password obtained from a password card or via website, there are two shortcomings: 1. Identification is inconvenient. Most consumers are unwilling to make time and effort-consuming inquiries online, particularly those senior or undereducated people who are unfamiliar with Internet; 2. False information may be obtained due to network faults and use of viruses.

For anti-counterfeit identification by commodity security codes via phone calls, there are also two shortcomings: 1. Identification can be made for only once, as the security code will go invalid once activated; 2. Telephone numbers printed on commodity package can also be fake; counterfeit and shoddy product manufacturers may use a full set of fake telephone numbers and fake inquiry systems, posing difficulty for crackdown on counterfeit products.

### Description of the Invention

The present invention is to solve the technical problems of complicated identification method, poor anti-counterfeit effect and poor identification effect by providing an anti-counterfeit identification method.

The present invention solves the foregoing technical problems as follows: it provides a method of anti-counterfeit identification wherein a tracking platform is established to render and store enterprises' registration information (including registered names and telephone numbers) and security codes, a client is established connected to the tracking platform for inquiry, manufacturers print on their products corresponding anti-counterfeit phone numbers, corporate security codes and commodity security codes obtained from the anti-counterfeit tracking platform, and commodity security systems are established by the manufacturers for storage of commodity security codes and inquiry records;

An inquiry client is connected to the anti-counterfeit tracking platform via an anti-counterfeit phone number; a corporate security code on a commodity label can be entered into the inquiry client for the anti-counterfeit tracking platform to judge whether the security code is true or false; if the security code is false, a code error will be returned to the inquiry client; or otherwise, the anti-counterfeit tracking platform will search for registration information of corresponding manufacturer based on the corporate security code and return the registered name of the manufacturer; meanwhile, the anti-counterfeit tracking platform switches to the commodity security system of the manufacturer via the registered phone number of the said manufacturer, and enters the commodity security code for the commodity security system to judge authenticity of the commodity and return inquiry results; if the commodity is authentic, "authentic" will be returned, or otherwise "counterfeit" will be returned.

The present invention brings the following benefits: it maintains constant association between manufacturers and their products, makes it possible to inquire about commodity authenticity at each procedure of a product sales process and feeds back commodity security information directly to corresponding manufactures, having reduced blindness and costs of manufacturers in crackdown on counterfeits; it provides inquiry services via fixed-line telephones or mobiles, having simplified anti-counterfeit identification; meanwhile, compared with the Internet, the telephone network is safer; as telephone numbers comprise only Arabic numerals, calls at the anti-counterfeit telephone numbers cannot be forged, provided telephone numbers for the anti-counterfeit tracking platform are fixed and properly publicized; additionally, the anti-counterfeit tracking platform is maintained by a public credible authority which will render information to inquirers based on corporate names registered on the anti-counterfeiting tracking platform, having eliminated the possibility of falsification by counterfeit and shoddy product manufacturers.

Based on the foregoing technical proposal, the present invention can be improved further in the following aspects.

Further, a commodity security code corresponds to a piece of commodity;
Further, the said commodity security code is a random code comprising above 18 digits;
Further, the said random code is a new random code generated and different from any existing random code;
Further, the said corporate security code corresponds to corporate registration information of each manufacturer.

The above proposals bring the following benefits: one-to-one correspondence between commodity security codes and commodities, and between corporate security codes and corporate registrations of manufacturers may further promote identification efficiency and improve identification effect; the said commodity security code is a random code comprising above 18 digits, and can meet the requirements of various production capacities; generation of new random codes different from any existing ones may further reduce the possibility of falsification.

Further, the said inquiry client is a communication device for communication via a telephone communication network;
Further, the said communication device is a mobile or fixed-line telephone.

The above proposals bring the following benefits: anti-counterfeit identification through widely popularized mobiles or fixed-line telephones has further enhanced availability of the present invention and enlarged the applicable scope of the said invention.

Further, when the said commodity security system obtains true information of a commodity inquired about, it will add the current inquiring phone number and calling time to the commodity inquiry records and store the commodity inquiry records, while returning the commodity inquiry records to corresponding inquiry client.

The above proposal brings the following benefits: through the inquiry times and dates in the commodity inquiry records of a true commodity, an inquirer may know the current status of the commodity and whether it is a second-hand commodity, having reduced possible circulation of second-hand commodities.

Further, when a commodity is an imported commodity, the anti-counterfeit tracking platform will return the name of corresponding foreign manufacturer registered on the anti-counterfeit tracking platform, while switching to the commodity security system of the foreign manufacturer via corresponding registered phone number.

The above proposal brings the following benefits: use of the same management and identification of commodities to further reduce complexity and cost of identification. Further, if a commodity is a commodity exported, the commodity security system will return commodity authenticity information in the local language of the place where the commodity is sold.

The above proposal brings the following benefits: use of the same management and identification, with commodity security information returned in the local language of the place where a commodity is sold makes the identification method more people-oriented and further enlarges the applicable scope of the identification method.

Further, the said anti-counterfeit telephone numbers, corporate security codes and commodity security codes are also printed on collective package of commodities.

The above proposal brings the following benefits: it enables intermediate distributors to make anti-counterfeit identifications without opening the collective package, having further reduced complexity of commodity identification.

### Description of the Drawings

Figure 1 shows the frame chart of the present invention;
Figure 2 shows the embodiment flow chart of the invention.

### Embodiments

The principle and characteristics of the present invention are described as follows in combination with the drawing figures. The embodiments are only presented to explain the present invention, but not limit scope of the present invention.

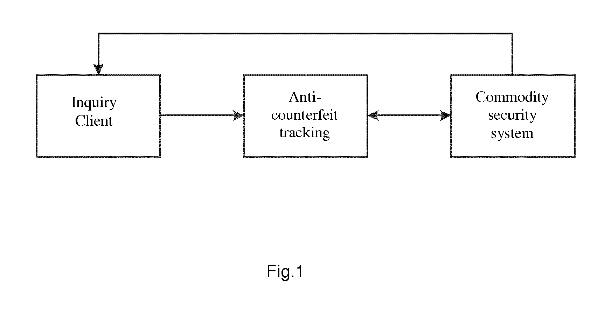

Figure 1 shows a frame chart of the present invention wherein a tracking platform is established to render and store enterprises' registration information (including registered names and telephone numbers) and security codes, a client is established connected to the tracking platform for inquiry, manufacturers print on their products corresponding anti-counterfeit phone numbers, corporate security codes and commodity security codes obtained from the anti-counterfeit tracking platform, and commodity security systems are established by the manufacturers for storage of commodity security codes and inquiry records.

An inquiry client is connected to the anti-counterfeit tracking platform via an anti-counterfeit phone number; a corporate security code on a commodity label can be entered into the inquiry client for the anti-counterfeit tracking platform to judge whether the security code is true or false; if the security code is false, a code error will be returned to the inquiry client; or otherwise, the anti-counterfeit tracking platform will search for registration information of corresponding manufacturer based on the corporate security code and return the registered name of the manufacturer; meanwhile, the anti-counterfeit tracking platform switches to the commodity security system of the manufacturer via the registered phone number of the said manufacturer, and enters the commodity security code for the commodity security system to judge authenticity of the commodity and return inquiry results; if the commodity is authentic, "authentic" will be returned, or otherwise "counterfeit" will be returned.

The said inquiry client is a communication device for communication via a telephone communication network; the said communication device is a mobile or fixed-line telephone; the said commodity security code is a random code comprising above 18 digits; the said random code is a new random code generated and different from any existing random code; a commodity security code corresponds to a piece of commodity and a corporate security code corresponds to corporate registration information of a manufacturer; when the said commodity security system obtains true information of a commodity inquired about, it will add the current inquiring phone number and calling time to the commodity inquiry records and store the commodity inquiry records, while returning the commodity inquiry records to corresponding inquiry client; when a commodity is an imported commodity, the foreign manufacturer of the imported commodity will register and obtain corporate registration information and a corporate security code from the same anti-counterfeit tracking system; if a commodity is a commodity exported, the commodity security system will return commodity authenticity information in the local language of the place where the commodity is sold; the said anti-counterfeit telephone numbers, corporate security codes and commodity security codes are also printed on collective package of commodities.

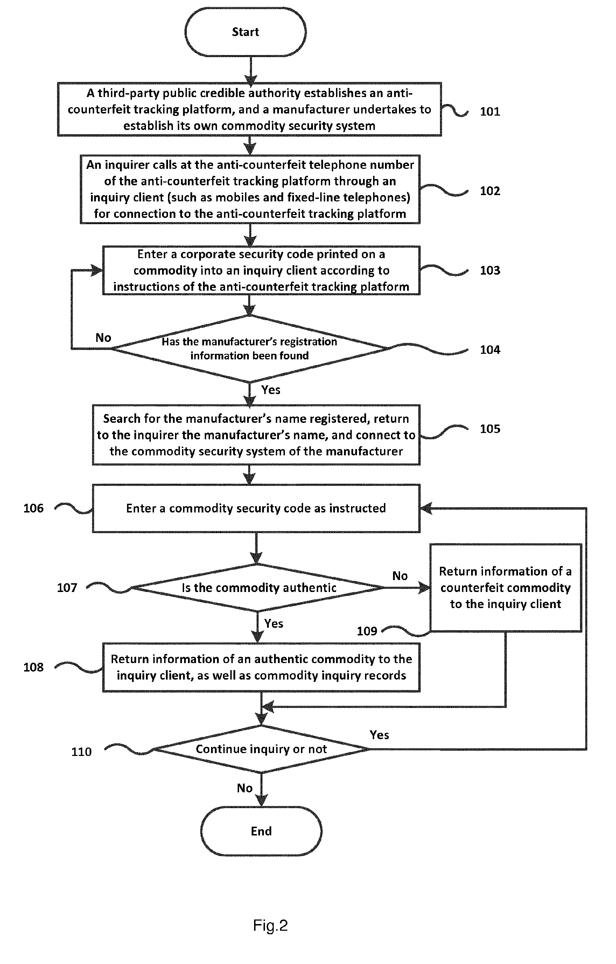

Figure 2 shows the embodiment flow chart of the present invention, particularly comprising the following steps:
Step 101, a third-party public credible authority establishes an anti-counterfeit tracking platform, and a manufacturer undertakes to establish its own commodity security system;
Step 102, an inquirer calls at the anti-counterfeit telephone number of the anti-counterfeit tracking platform through an inquiry client (such as mobiles and fixed-line telephones) for connection to the anti-counterfeit tracking platform;
Step 103, enter a corporate security code printed on a commodity into an inquiry client according to instructions of the anti-counterfeit tracking platform;
Step 104, the anti-counterfeit tracking platform searches for registration information of corresponding manufacturer based on the corporate security code; once registration information is obtained, it will go to Step 105; or otherwise it will go to Step 103;
Step 105, search for the manufacturer's name registered and anti-counterfeit telephone number the manufacturer has reserved at the commodity security system, return to the inquirer the manufacturer's name, and connect the inquirer through the telephone number the manufacturer has reserved at the commodity security system to the commodity security system;
Step 106, enter the commodity security code printed on the commodity into the inquiry client according to instructions of the anti-counterfeit tracking platform for entry of commodity security codes;
Step 107, the commodity security system determines whether the commodity is authentic based on the commodity security code; if the commodity is authentic, go to Step 108; or otherwise go to Step 109;
Step 108, return information of an authentic commodity to the inquiry client, as well as inquiring telephone numbers and calling times in the commodity inquiry records; then go to Step 110;
Step 109, return information of a counterfeit commodity to the inquiry client, and goes to Step 110;
Step 110, continue inquiry or not; if yes, it goes to Step 106; or if no, it goes to end.

The commodity security code in the above steps is a random code comprising above 18 Arabic numerals, which can meet the requirement of different commodity quantities; when a corporate security code or commodity security code is entered, there will be user-friendly prompts to facilitate the whole identification process. Upon anti-counterfeit identification, the commodity security system will take the commodity security code entered as a key word to be searched in the database of the commodity security system; if the commodity security code is found, it is true; or otherwise it is false. As for selection of an anti-counterfeit tracking platform, a third-party public authority with high credibility is preferred, so that inquirers will have more confidence in the identification method and manufacturers are bound; meanwhile, the telephone number of the anti-counterfeit tracking platform is to be popularized to further reduce the possibility of falsification.

The above mentioned are embodiments preferably selected for the present invention, but shall not pose any restriction on the invention. Any modification, equivalent replacement or improvement in spirit and principle of the present invention shall be also included in the patent scope of the invention to be protected.

## Claims

1. A method of anti-counterfeit identification, wherein:
A tracking platform is established to render and store enterprises' registration information (including registered names and telephone numbers) and security codes, a client is established connected to the tracking platform for inquiry, manufacturers print on their products corresponding anti-counterfeit phone numbers, corporate security codes and commodity security codes obtained from the anti-counterfeit tracking platform, and commodity security systems are established by the manufacturers for storage of commodity security codes and inquiry records;
An inquiry client is connected to the anti-counterfeit tracking platform via an anti-counterfeit phone number; a corporate security code on a commodity label can be entered into the inquiry client for the anti-counterfeit tracking platform to judge whether the security code is true or false; if the security code is false, a code error will be returned to the inquiry client; or otherwise, the anti-counterfeit tracking platform will search for registration information of corresponding manufacturer based on the corporate security code and return the registered name of the manufacturer; meanwhile, the anti-counterfeit tracking platform switches to the commodity security system of the manufacturer via the registered phone number of the said manufacturer, and enters the commodity security code for the commodity security system to judge authenticity of the commodity and return inquiry results; if the commodity is authentic, "authentic" will be returned, or otherwise "counterfeit" will be returned.

2. A method of anti-counterfeit identification according to Claim 1 wherein the said inquiry client is a communication device for communications via the telephone communication network.

3. A method of anti-counterfeit identification according to Claim 1 wherein the said communication device can be a mobile or fixed-line phone.

4. A method of anti-counterfeit identification according to Claim 1 wherein the said commodity security code is a random code comprising over 18 Arabic numerals.

5. A method of anti-counterfeit identification according to Claim 4 wherein the said random code is a new random code generated and different from any existing random code.

6. A method of anti-counterfeit identification according to Claim 1 wherein a commodity security code corresponds to a piece of commodity and a corporate security code corresponds to corporate registration information of a manufacturer.

7. A method of anti-counterfeit identification according to Claim 1 wherein when the said commodity security system obtains true information of a commodity inquired about, it will add the current inquiring phone number and calling time to the commodity inquiry records and store the commodity inquiry records, while returning the commodity inquiry records to corresponding inquiry client.

8. A method of anti-counterfeit identification according to Claim 1 wherein when a commodity is an imported commodity, the anti-counterfeit tracking platform will return the name of corresponding foreign manufacturer registered on the anti-counterfeit tracking platform, while switching to the commodity security system of the foreign manufacturer via corresponding registered phone number.

9. A method of anti-counterfeit identification according to Claim 1 wherein if a commodity is a commodity exported, the commodity security system will return commodity authenticity information in the local language of the place where the commodity is sold.

10. A method of anti-counterfeit identification according to Claims 6-9 wherein the said anti-counterfeit phone number, corporate security code and commodity security code are also printed on collective package of commodities.
